# EUROPÄISCHE PATENTANMELDUNG

(11) **EP 0 803 305 A2**
(43) Veröffentlichungstag der Anmeldung: **29.10.1997**
(21) Anmeldenummer: 97850063.5
(22) Anmeldetag: 23.04.1997
(51) Int. Cl.: B23B 31/16

(54) **Spannvorrichtung**

(30) Priorität: 23.04.1996 SE 9601544
(71) Anmelder: Bengtsson, Stig, 591 36 Motala (SE)
(72) Erfinder: Bengtsson, Stig, 591 36 Motala (SE)
(74) Vertreter: Bjellman, Lennart Olov Henrik

(57) **Zusammenfassung**

Die Erfindung bezieht sich auf eine Spannvorrichtung, worin zwei indexierbare zylindrische Backen (8, 9) drehbar in den Grundbacken (3,4) von einem Zwei-Backenfutter gelagert sind und sperrbar in eingestellter Lage mit Hilfe von federbelasteten Sperrorganen (12, 13), die in den Grundbacken gelagert sind. Die Zylinderbacken zeigen axial V-geformte Spuren von verschiedener Tief auf, und sind einstellbar für Festhalten von einem Werkzeug mit quadratischem Endzapfen zwischen gegenüberstehenden Spuren mit gleicher Tiefe.

## Beschreibung

Die Erfindung bezieht sich auf eine Spannvorrichtung für haltende Werkzeuge, und zwar ein Zweibackenfutter mit indexierbaren Backen für die Einspannung von z.B. eines Gewindebohrers mit kvadratischem Zapfenende.

Bei bekannten Spannvorrichtungen werden in der Regel komplettierende Zapfenhalter oder Hülsen für die Spannung des Gewindebohrers mit verschiedenen Durchmessern benötigt, um dadurch die gewünschte Spannkapazität zu erhalten.

Innerhalb des Technikbereiches ist es bekannt, Drehbankfutter mit indexierbaren Backen zur Verfügung zu halten. Demnach weisen US A 2 896 958 und US A 2 950 117 ein Dreibackenfutter mit indexierbaren Backen für Einspannung von Arbeitsstücken mit zylindrischem Halteteil an. Man versteht, dass das Dreibackenfutter sich jedoch nicht für die Einspannung von einem Werkzeug mit kvadratischem Endquerschnitt eignet.

Die Erfindung bezweckt, die obengenannten Probleme zu beheben, indem eine Spannvorrichtung mit indexierbaren Backen in einem Zweibackenfutter angewiesen wird, wodurch das Ziel mit einer Spannvorrichtung gemäss beigefügten Patentansprüchen erreicht wird.

Die Erfindung wird nachfolgend mit Hinweis auf die beigefügten Zeichnungen näher beschrieben, wo
Figur 1 eine erste Ausführungsform der Spannvorrichtung in einem Längenquerschnitt zeigt.
Figur 2 zeigt die Spannvorrichtung der Figur 1 von vorne in einer Endansicht.
Figur 3a und 3b zeigen in vergrössertem Masstab einen in die Spannvorrichtung eingehenden Halter oder eine Zylinderbacke in Perspektivansicht bzw. eine ebene Endansicht.
Figur 4 zeigt in vergrössertem Masstab eine alternative Ausführungsform der Zylinderbacke in einer Perspektivansicht.
Figur 5 zeigt die Zylinderbacke in Figur 4 drehbar gelagert in einer anderen Ausführungsform der Spannvorrichtung in einer teilweise weggebrochenen Querschnittansicht,
Figur 6 zeigt in vergrössertem Masstab eine weitere alternative Ausführung einer Zylinderbacke in einer Perspektivansicht.
Figur 7 zeigt die Zylinderbacke in Figur 6 drehbar gelagert in einer dritten Ausführungsform der Spannvorrichtung, und
Figur 8a-e zeigen eine alternative, vorgezogene Ausführung der Spannanordnung gem. der Erfindung.

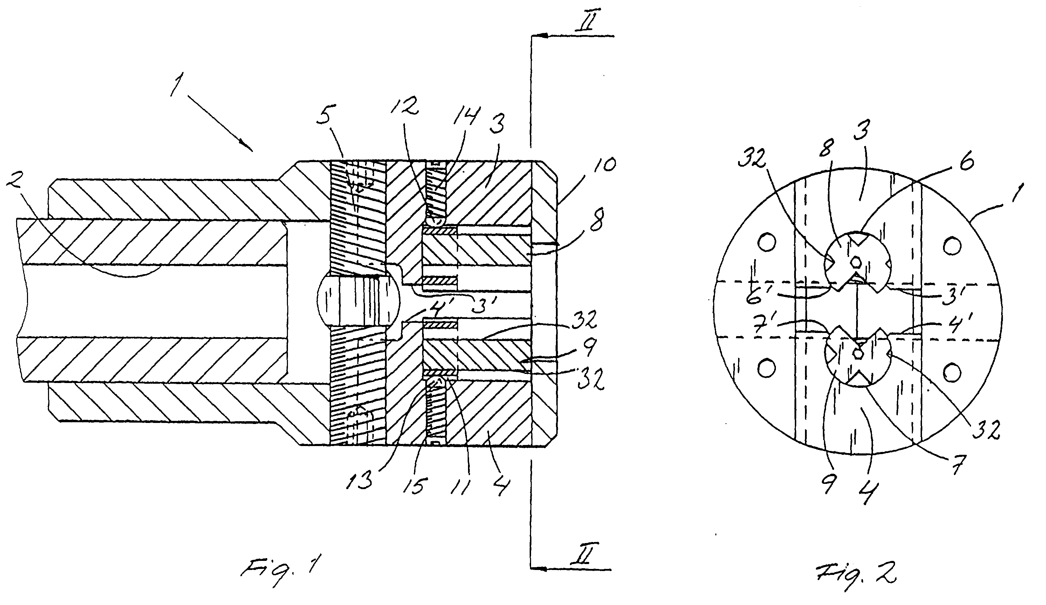

Figur 1 zeigt im Querschnitt eine Spannhülse 1, angeordnet auf nicht näher gezeigte Weise auf eine Spannachse 2. Ein Paar in radialen Steuerungen gelagerten und einstellbaren Backen 3 bzw. 4, sind in der Spannhülse angeordnet, und mit Hilfe einer rechts- bzw. linksgewindeten Schraube 5, radial verschiebbar, um eine Spannfunktion für das Festhalten eines Werkzeuges zu erhalten. Die Stellschraube 5 ist frei rotierend in der Spannhülse und wird axial von einem Paar radial eingesteckten Stiften gehalten, welche von den entgegenstehenden Seiten einen Überfall um eine in der Mitte der Schraube angeordneten Taille bilden. Die Backen haben in ihrem inneren Ende einen halbzirkularen, innen gewindeten Überfall, welcher mit Schraube 5 eingreift.

Die Backen 3 und 4, in der Fortsetzung Grundbacken 3 und 4 genannt, weisen axiale Bohrungen 6 bzw. 7 auf, siehe auch Fig. 2, in welchen zylindrische Halteanordnungen oder Zylinderbacken 8 bzw. 9 mit Gleitpassung eingeführt sind. In der bevorzugten Ausführungsform ist eine Deckplatte 10 vor den Zylinderbacken angeordnet, um diese in axialer Richtung zu fixieren.

Die Bohrungen 6 und 7 schneiden mit ihrer Periferi (ihrem Umkreis) die gegeneinander gewendeten Flächen oder Endebenen 3', 4' von den Backen 3 bzw. 4, so dass in diesen ein axial ausgestreckter Schlitz 6', 7' gebildet wird, durch den die Zylinderbacken 8 bzw. 9 mit einer Partie ihrer Mantelfläche radial innerhalb der Endebenen 3', 4' herausstehen. Der genannte Schlitz hat eine Breite die zumindest der breitesten der axialen Spuren entspricht, die in den Zylinderbacken auf nachstehend beschriebene Weise angeordnet sind.

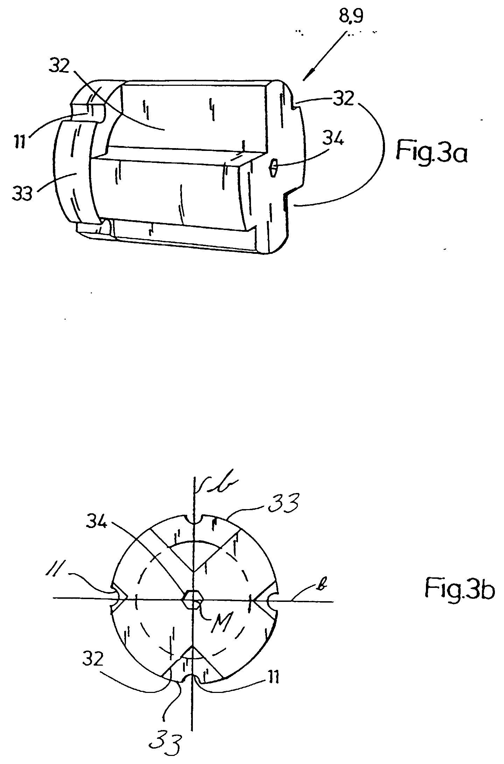

Die Zylinderbacken 8 und 9, siehe auch Fig. 3a und 3b, zeigen in einer inneren Endpartie eine Anzahl von axial ausgestreckten Spuren 11 mit V-formigem oder kreisbogenformigem Querschnitt. Bei in den Grundbacken 3, 4 eingepassten Lage der Zylinderbacken liegt das radial wirkende Sperrorgan, wie federbelastete Kugeln 12 bzw. 13, in der genannten Spur 11, um die Zylinderbacke in einer eingestellten Drehlage gegen Drehung zu sperren. Die Kugeln 12 und 13 sind in radialen Bohrungen in den Grundbacken 3 und 4 gelagert, innerhalb einer respektiven Schraub/Federkombination 14 und 15. Als Alternative können anstelle der Kugeln 12, 13 federbelastete Stifte oder ähnliches für Feststellung der Zylinderbacke in der eingestellten Drehlage angeordnet sein.

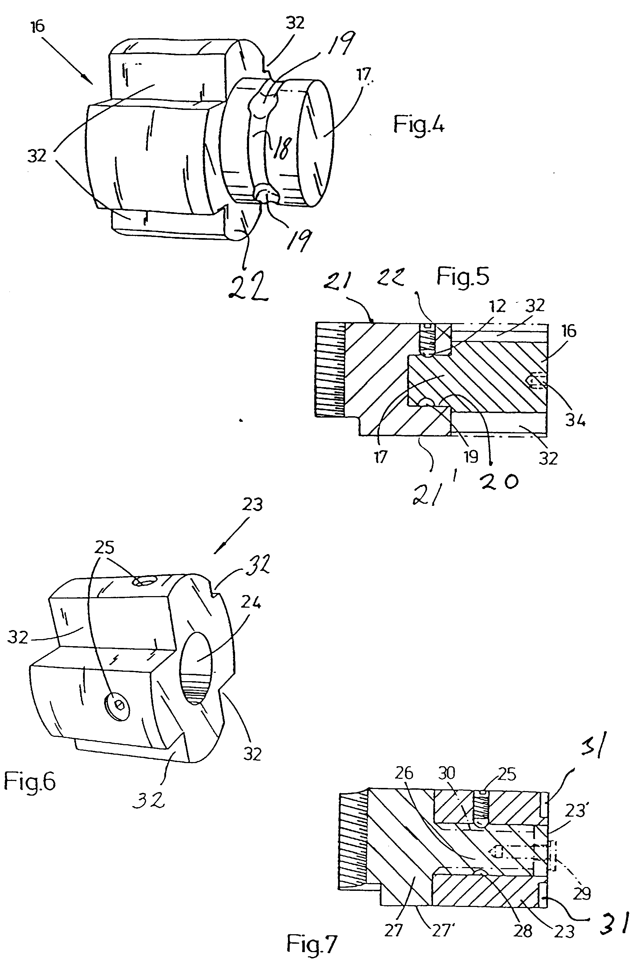

In einer anderen alternativen Ausführungsform, siehe Fig. 4, kann eine Zylinderbacke 16 in ihrem unteren oder inneren Ende einen Pivotzapfen 17 aufzeigen mit einer periferen und ringsherum gehenden Spur 18, in welcher Kugeln 12, 13 oder ähnliches, radial wirkendes Sperrorgan bei der Drehung der Zylinderbacke zwischen den verschiedenen Sperrlagen läuft, die in dieser Ausführung aus Vertiefungen 19 der periferen Spur bestehen. Hierdurch erhält das Sperrorgan auch eine axial haltende Funktion in der sperrenden Lage und unter Drehung der Zylinderbacke 16.

Der Pivotzapfen 17 ist mit Gleitpassung in eine axiale Bohrung 20 in eine Grundbacke 21 eingeführt, siehe Fig. 5, so dass die Zylinderbacke 16 mit ihrer eingesteckten Endfläche 22 gegen die Vorderfläche der Grundbacke stützt. Die Anbringung der Bohrung 21 und der Durchmesser der Zylinderbacke 16 werden so ausgeführt, dass die Zylinderbacken sich in der radialen innersten Lage der Grundbacken in der Spannhülse treffen, und mit ihren Mantelflächen (in der Fig. der Zeichnung mit Strich-Punkt-Linie markiert) tangieren oder strecken sich radial innerhalb der Endebene 21' der Grundbacken. In der eingepassten Lage der Zylinderbacke 16 in der Bohrung 20 streckt sich das Sperrorgan 12, radial gelagert in der Grundbacke 21, hinein in die Vertiefung 19, um die Zylinderbacke in der eingestellten Drehlage zu sperren.

In einer dritten alternativen Ausführungsform gem. Fig. 6 zeigt eine Zylinderbacke 23 ein axiales Zentrumloch 24, was durchgehend sein kann oder ein Sackloch in der Zylinderbacke 23 bilden kann. Radial durch die Wand der Zylinderbacke 23 streckt sich ein Sperrorgan 25 oder mehrere, wie federbelastete Kugeln, Stifte oder ähnliches, angeordnet in einer zwischenliegenden Partie, oder mehreren, von der Spur, die nachfolgend näher beschrieben wird.

Ein zylindrischer Zapfen 26 einer Grundbacke 27, siehe Fig. 7, ist mit Gleitpassung in das Zentrumloch 24 eingeführt. Das Sperrorgan 25, in der Zylinderbacke radial gelagert, streckt sich dabei, um mit den Vertiefungen 28 in die Mantelfläche des Zapfens 26 sperrend einzugreifen. Die Andordnung des Zapfens 26 und/oder der Durchmesser der Zylinderbacke 23 sind so gewählt, dass die Zylinderbacke sich in der aufgeschobenen Lage in Linie mit oder radial innerhalb Endebene 27' der Grundbacke mit ihrer Mantelfläche streckt.

Um die Zylinderbacke 23 auf Zapfen 26 der Grundbacke axial zu fixieren, kann auf oben gezeigte Weise der Zapfen mit einer periferen, ringsherum gehenden Spur versehen sein, in welche das Sperrorgan unter Drehung der Zylinderbacke gleitet. Als Alternative wird die Zylinderbacke axial durch eine im Zapfen 26 eingewindete Schraube 29 fixiert, die sich drehend durch eine Endebene 23' auf die Zylinderbacke streckt (in Fig. 7 mit Strich-Punkt-Linie gezeigt). Im letzten Fall können die Sperrlagcn im Zapfcn 26 als axiale, V-geformte oder bogengeformte Spur 30 ausgeführt sein. Schlitze 31 in der Endebene der Zylinderbacke dienen zur Aufnahme eines Werkzeuges bei Drehung des Zylinderzapfens 23 auf der Grundbacke 27.

Für Einspannen eines Werkzeuges, z.B. eines Gewindezapfens, haben die Zylinderbacken 8, 9, 16 und 23 in ihrer Periferi eine Anzahl von axialen Spuren 32. Die Anzahl kann innerhalb des Rahmens der Erfindung variieren, aber sind mit Vorteil vier, wie in den gezeigten Ausführungsbeispielen, d.h. eine in jedem Quadrant der zylindrischen Backe. Die Spur 32 hat in der bevorzugten Ausführungsform einen V-formigen Querschnitt, mit dem Boden der Spur eine rechtwinklige Ecke bildend, dessen verlängerte Bisektrix b den Zentrumpunkt M der Zylinderbacke schneidet, siehe Fig. 3b. Die Spuren 32 sind zu verschiedenen Tiefen aufgenommen, wobei die Zylinderbacken 8 und 9, bzw. 16 und 23 der Spannvorrichtung paarweise Spur 32 mit gleicher Tiefe aufzeigen. Als Alternative streckt sich die Spur 32 axial längs der ganzen Länge der Zylinderbacke, wobei ein Ring 33 am inneren Ende der Zylinderbacke angebracht und fixiert sein kann, um die Spuren 11 zur Verfügung zu stellen. Man versteht, dass die Anzahl Spuren 11 oder Vertiefungen 19 der Anzahl Spuren 32 in der Zylinderbacke entsprechen, wobei diese in den ersten zwei Ausführungsformen vorzugsweise mitten vor entsprechender Spur 32 angeordnet sind, wie in den Zeichnungsfiguren, während dagegen in der dritten Ausführungsform die Vertiefungen 28 oder Spuren 30 winkelverschoben auf dem Zapfen 26 sind, z.B. mit 45 Grad im Verhältnis zu Spuren 32.

Man versteht, dass die Ausführung der Spur 32 für Festhalten des Werkzeuges mit anderen Endquerschnitten als quadratische variiert werden kann, weshalb die Erfindung nicht auf die dargestellte rechtwinklige V-Form begrenzt ist, sondern auch Spuren mit anderen Öffnungswinkeln zur Aufnahme von z.B. sechs- oder achtkantigen Werkzeugen umfasst.

Die Zylinderbacken 8, 9, 16 haben in ihrem vorderen Ende eine Aussparung für ein Werkzeug, z.B. einen Insechs-Schlüssel (Sechskantschlüssel) (nicht gezeigt) zum Drehen der Zylinderbacke bei ihrer Umstellung für Einspannung von z.B. Gewindezapfen in anderer Abmessung.

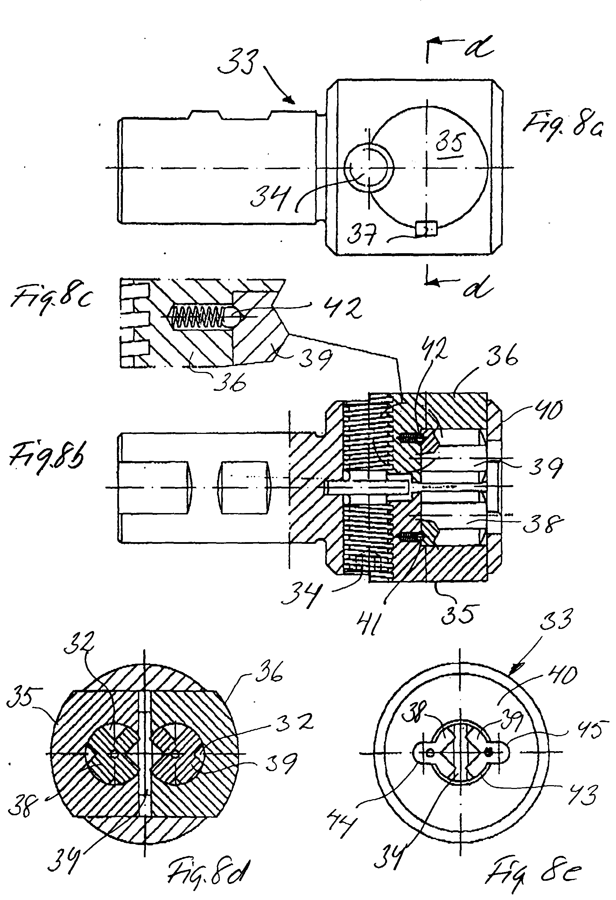

Mit Hinweis auf Fig. 8a-e wird eine alternative bevorzugte Ausführungsform der erfinderischen Spannvorrichtung gezeigt. Eine Spannhülse 33 beinhält eine Stellschraube 34 für Eingriff mit und radialer Einstellung von ein Paar zylindergeformten Grundbacken 35, 36 (von welchen nur die Grundbacke 35 in der Zeichnungsfigur 8a zu sehen ist) welche von einem Steuerkeil 37 gesteuert wird, siehe Fig. 8a, was eine ebene Seitenansicht einer Spannhülse 33 ist. Fig. 8b zeigt in einem partiellen Horizontalquerschnitt die Stellschraube 34 und die Grundbacken 35, 36 sowie Zylinderbacken 38, 39, in axialen, zylindrischen Bohrungen in den Grundbacken drehbar gelagert. Die Zylinderbacken 38, 39 werden axial von einem vorderen Teil 40 gehalten, in einem Stück mit der Spannhülse geformt und dessen vordere Endebene ausmachend, und wird in eingestellter Drehlage mit Hilfe der federbelasteten Sperrorgane 41, 42 gehalten, welche axial in den Grundbacken gelagert sind, um mit der Feststellungslage in der inneren Endebene der Zylinderbacken zusammenzuwirken, siehe Detailquerschnitt in Fig. 8c. Fig. 8d zeigt die Grundbacken in einer Querschnittsansicht längs der Linie d-d in Fig. 8a, mit den drehbaren, indexierbaren Zylinderbacken 38, 39 mit obengenannter Spur 32 für Festhalten eines Werkzeuges. Fig. 8c zuletzt zeigt eine ebene Endansicht der Spannhülse 33 mit dessen vorderer Endebene 40 eine zentrale Öffnung 43 zeigend, für das Einstecken des Endzapfens des Werkzeuges zwischen der Spuren 32. Die Öffnung 43 zeigt in ihrer Periferi zwei gegenüberstehende Aussparungen 44, 45 für Einführung eines Werkzeuges, mit welchem die Zylinderbacken für die Einstellung zum Festhalten eines Werkzeuges von anderer Abmessung gedreht werden.

Mit einer Spannvorrichtung gem. der Erfindung erhält man eine erhöhte Kapazität für das Festhalten von Werkzeugen in verschiedenen Abmessungen. Durch die Kombination von radial einstellbaren Grundbacken und in diese eingepasste, drehbare Zylinderbacken mit einer Anzahl von paarweise gegenüberstehenden Spuren verschiedener Tiefen wird ein Werkzeughalter von relativ kleinem Diameter aber mit einem optimalen Einspanngebiet für Fixierung von z.B. Werkzeug für Gewindeschneiden zur Verfügung gestellt. Ohne Hilfe von besonderen Zapfenhaltern oder Hülsen hat es sich z.B. gezeigt, dass durch geeignete Wahl der Tiefe der Spur 32 Gewindezapfen für Schneiden von Gewinde von M1 bis M20 in die Spannvorrichtung fixiert werden können, wobei Umstellung von einer Abmessung zur anderen schnell und einfach durch Drehen und Einstellen der Zylinderbacken zu verschiedenen Feststellungslagen erfolgt.

## Patentansprüche

1. Spannvorrichtung zum Festhalten eines Werkzeuges, bestehend aus zwei in radialen Steuerungen einstellbare Grundbacken (3, 4, 35, 36) sowie einer in entsprechender Grundbacke drehbar gelagerten, indexierbaren zylindrischen Backe (8, 9, 38, 39) für Fixierung von Werkzeugen mit quadratischen Zapfenenden von variierenden Abmessungen,
**gekennzeichnet** dadurch,
dass die indexierbaren, zylindrischen Backen (8, 9, 38, 39) in ihren Mantelflächen eine Anzahl gleichmässig verteilte, axial laufende V-geformte Spuren (32) von verschiedenen Tiefen aufweisen, wobei der Boden der Spur im Querschnitt eine Ecke bildet, dessen Bisektrix den Mittelpunkt (M) der zylindrischen Backe schneidet,
dass die zylindrischen Backen (8, 9, 38, 39) in Bohrungen in den Grundbacken (3, 4, 35, 36) drehbar gelagert sind, wodurch die Grundbacken die Zylinderbacken umschliessen, mit Ausnahme einer Partie von der Mantelfläche der Zylinderbacke, welche Partie sich durch eine Öffnung in entsprechender Endebene der Grundbacke und radial innerhalb dieser streckt, sowie
dass die zylindrischen Backen Feststellungslagen aufzeigen, in welche Sperrorgane (12, 13, 41, 42) eingreifen, um lösbar die Zylinderbacken in gewünschter Drehlage zu sperren, worin Spuren (32) von gleicher Tiefe paarweise mitten voreinander zum Festhalten des Werkzeuges eingestellt werden.

2. Spannvorrichtung gem. Anspruch 1, **gekennzeichnet** dadurch, dass die Grundbacke (3, 4) eine Bohrung aufweist in welcher die Zylinderbacke (8, 9) drehbar gelagert ist und gegen Drehung sperrbar in wahlfreien, vorher bestimmten Lagen mit Hilfe von federbelasteten Kugeln (12, 13) oder Stiften, gelagert in der Grundbacke und radial eingreifend mit der Mantelfläche der Zylinderbacke.

3. Spannvorrichtung gem. Anspruch 1, **gekennzeichnet** dadurch, dass die Grundbacke (35, 36) eine Bohrung aufweist, in welcher die Zylinderbacke (38, 39) drehbar gelagert ist und gegen Drehung sperrbar in wahlfreien, vorher bestimmten Lagen mit Hilfe von federbelasteten Kugeln (41, 42) oder Stiften, in der Grundbacke gelagert und axial eingreifend mit innerer Endebene der Zylinderbacke.

4. Spannvorrichtung gem. Anspruch 3, **gekennzeichnet** dadurch, dass ein Paar, in einer Spannhülse (33) radial einstellbare und zylindergeformte Grundbacken (35, 36),eine in entsprechender Grundbacke axial gelagerte, drehbare Zylinderbacke (38, 39) die axiale, V-geformte Spuren von verschiedenen Tiefen in ihrer Mantelfläche aufzeigen, worin die Zylinderbacken (38, 39) axial in der Spannhülse innerhalb einer vorderen Partie (40), geformt in einem Stück mit der Spannhülse, gehalten werden.

5. Spannvorrichtung gem. obengenannten Ansprüchen, **gekennzeichnet** dadurch, dass die indexierbaren Zylindcrbacken vier Stück rechtwinkelige V-geformte, axial laufende Spuren, gleichmässig verteilt längs ihrer Mantelfläche, aufzeigen.
